# EUROPÄISCHE PATENTSCHRIFT

(11) **EP 3 043 043 B1**
(45) Veröffentlichungstag und Bekanntmachung des Hinweises auf die Patenterteilung: **05.02.2020**
(21) Anmeldenummer: 15199755.8
(22) Anmeldetag: 14.12.2015
(51) Int. Cl.: F02B 31/06, F02F 1/42, F02M 35/10

(54) **SCHALTVORRICHTUNG MIT LUFTSPALTISOLIERUNG IM ZYLINDERKOPFFLANSCH**
SWITCHING DEVICE WITH AIR GAP ISOLATION IN CYLINDER HEAD FLANGE
DISPOSITIF DE COMMUTATION COMPRENANT UNE GAINE D'AIR ISOLANTE DANS UNE BRIDE DE CULASSE

(30) Priorität: 07.01.2015 DE 102015000016
(43) Veröffentlichungstag der Anmeldung: 13.07.2016
(73) Patentinhaber: MANN + HUMMEL GMBH, 71636 Ludwigsburg (DE)
(72) Erfinder: Korn, Alexander, 74363 Güglingen (DE); Bühl, Heinz, 74235 Erlenbach (DE); Pietrowski, Herbert, 74385 Pleidelsheim (DE)

(56) Entgegenhaltungen:
- DE-A1- 10 227 254
- DE-A1-102009 053 708
- DE-U1- 9 319 545
- JP-A- 2007 056 794
- JP-A- 2009 052 491
- US-A1- 2009 050 098
- US-B2- 8 464 682

## Beschreibung

### Technisches Gebiet

Die Erfindung betrifft eine Schaltvorrichtung für eine Sauganlage für Ansauggas, insbesondere Ansaugluft, und einen Zylinderkopf mit Einlassventilen und einen Brennraum einer Brennkraftmaschine, insbesondere eines Kraftfahrzeugs, zum Öffnen oder teilweise Schließen wenigstens eines Einlasskanals eines Brennraumes, wobei eine Schalteinheit in einem äußeren Ende der Kanäle der Sauganlage eingebracht ist, wobei dieses äußere Ende in eine tiefe Aussparung im Zylinderkopf der Brennkraftmaschine einragt, die bis nahe an ein Einlassventil reicht.

### Stand der Technik

Aus der WO 2009/149724 A1 ist ein Luftansaugsystem für eine Brennkraftmaschine mit einer steuerbaren Luftklappe bekannt zur Einflussnahme auf die Luftströmung, beispielsweise zur Drallbildung oder zur Tumblebildung, der einströmenden Luft und damit auf die Gemischbildung und den Verbrennungsablauf.
Mit Tumbleströmung werden walzenförmige Strömungen bezeichnet, deren Drehachse im Wesentlichen quer zur Brennraumachse, also im Wesentlichen parallel zur Kurbelwellenrichtung, liegen. Steuerbare Klappen in Luftansaugsystemen, die in Wirkstellung Strömungen dieser Art verursachen können, werden Tumbleklappen genannt.
Mit Drall-Strömung werden Strömungen bezeichnet, deren Drehachse im Wesentlichen der Zylinderbohrungsachse entspricht. Steuerbare Klappen in Luftansaugsystemen, die in Wirkstellung Strömungen dieser Art im Brennraum bewirken, werden Drall-Klappen genannt.

Die JP2007 056794 A zeigt eine Einlasskanalstruktur eines Verbrennungsmotors, mit deren Aufbau der Anstieg der Temperatur der Ansaugluft durch eine hohe thermische Isolationswirkung unterdrückt werden soll. Eine thermische Isolierhülse mit niedrigerer Wärmeleitfähigkeit als die des Zylinderkopfes bildet einen Raum zwischen einer äußeren Umfangsfläche der wärmeisolierenden Hülse und dem Zylinderkopf.

Der JP 2009 052491 A ist ein Verbrennungsmotor mit einer Struktur zu entnehmen, die eine Ansammlung von Kraftstoff verhindern soll. Der Verbrennungsmotor weist einen Zylinderkopf mit einer Einlassöffnung und einem Hülsenelement auf, wobei ein Spalt zwischen einem oberen Abschnitt des Hülsenelementes definiert ist und das Hülsenelement eine Durchgangsöffnung aufweist.

Aus DE 93 19 545 U1 ist ein fremdgezündeter Hubkolbenmotor mit wenigstens einer Einlassöffnung je Zylinder bekannt, die jeweils durch ein Einlassventil verschließ- und öffenbar ist. Der Einlassöffnung ist je Zylinder ein kanalförmiger Einlass für Luft- und/oder ein Luft-Kraftstoff-Gemisch zugeordnet, der mit Mitteln in Verbindung steht, die eine steuerbare Ablenkung der Strömung beim Übertritt aus dem Einlass durch die Einlassöffnung in den Zylinder ermöglichen.

Der US 8 464 682 B2 ist eine Lufteinlassvorrichtung für einen Motor mit einen Kanal, der darin einen ersten Luftströmungskanal aufweist, ein Gehäuse, in dem sich ein zweiter Luftströmungskanal befindet, und ein Drehventil mit einer Ventilplatte zu entnehmen. Ein Abschnitt des Gehäuses, der Einlassluft zu einer Einlassöffnung eines Zylinderkopfs leitet, weist eine kreisförmige gegenüberliegende Oberfläche auf, die einer Form eines gekrümmten Oberflächenabschnitts der Ventilplatte angepasst ist.

DE 10 2009 053708 A1 zeigt ein Einlasssystem für einen Verbrennungsmotor, wobei das Einlasssystem eine Leitung und ein einseitig eingespanntes Ventil aufweist. Die Einlassluft wird einer Brennkammer des Verbrennungsmotors über einen Einlasskanal zugeführt. Das einseitig eingespannte Ventil weist einen plattenartigen Ventilhauptkörper, eine drehbare Welle und einen Ventilverlängerungsabschnitt auf. Der plattenartige Ventilhauptkörper öffnet und schließt den Einlasskanal der Leitung.
Mit der aus DE 102 27 254 A1 bekannten Verschlussvorrichtung kann ein Teil der Lufteinlasskanäle in einem Mehrzylinder-Verbrennungsmotor verschlossen werden. Die Verschlussvorrichtung ist mit einem Schieberventil versehen, das im Wesentlichen aus Verschlusselementen besteht, welche durchgehend eine parallel zur Achse der Lufteinlasskanäle verlaufende Bohrung aufweisen.

Das in der WO 2009/149724 A1 gezeigte Luftansaugsystem für eine Brennkraftmaschine mit einem Zylinderkopf, weist jeweils einen ungeteilten Einlasskanaleintritt für zwei Gaseinlasskanäle mit zwei Gaseinlassventilen eines Zylinders auf, wobei eine Zwischenwand zwischen den beiden Gaseinlasskanälen stromab vom Einlasskanaleintritt beginnt, mit einer Luftklappe, die im Querschnitt eines Luftzuführkanals liegt und eine Drehachse X aufweist, die im Wesentlichen in einer Querschnittsebene des Luftzuführkanals liegt, wobei die Luftklappe zwischen einer Neutralstellung, in der sie in Längsrichtung des Luftzuführkanals ausgerichtet ist, und einer Wirkstellung, in der sie quer im Luftzuführkanal liegt und den Kanalquerschnitt teilweise oder ganz sperrt, verstellbar ist.
Nachteilig ist, dass die Tumbleklappen relativ weit weg vom Brennraum (Einlassventil) angeordnet sind. Dadurch baut sich die Intensität des Tumbles größtenteils ab, bis die Strömung den Zylinder erreicht. Zusätzliche Bauteile wie z. B. Kanaltrennbleche sind notwendig um diesem Effekt entgegenzuwirken. Durch einen langen Strömungsweg der Tumblewirbel im Zylinderkopf erwärmt sich die Verbrennungsluft nachteilig.

Der Erfindung liegt die Aufgabe zugrunde, eine Schaltvorrichtung der eingangs benannten Art zu gestalten, um diese Nachteile zu beheben.

### Offenbarung der Erfindung

Die Erfindung unterscheidet sich vom Stand der Technik darin, dass eine Schaltvorrichtung im Zylinderkopf in der Nähe der Einlassventile aufgenommen ist und das Gehäuse der Schalteinheit gegenüber dem Zylinderkopf thermisch isoliert ist.

Die Schaltvorrichtung kann aus einzelnen Schalteinheiten bestehen, die in den Einlasskanälen im Zylinderkopf einer Brennkraftmaschine angeordnet sind. Dabei können die Gehäuse mehrerer Schalteinheiten verbunden sein oder als getrennte Gehäuse ausgebildet sein.
Erfindungsgemäß ist das Gehäuse der Schalteinheit Teil der Sauganlage. Es ist einstückig durch die Kanäle der Sauganlage gebildet oder mit den Kanälen unlösbar verbunden, beispielsweise angeschweißt oder umspritzt.
Nicht erfindungsgemäß kann das Gehäuse der Schalteinheit in Form eines Zwischenflansches zwischen Sauganlage und Zylinderkopf ausgestaltet sein.
Der Zwischenflansch mit der Schalteinheit kann dabei mit der Sauganlage und/oder mit dem Zylinderkopf fest verbunden sein. In einer nicht beanspruchten Ausführung ist der Zwischenflansch durch ein Festklemmen zwischen Sauganlage und Zylinderkopf an der Brennkraftmaschine befestigt.
Die Schalteinheit ragt in eine tiefe Aussparung im Zylinderkopf bis nahe an die Einlassventile heran. Aufgrund dieser Anordnung wird bei angestellter Klappe ein Tumblewirbel erst kurz vor dem Einlassventil erzeugt. Dies führt zu einer sehr effektiven Tumbleströmung im Brennraum, da der Strömungsweg für die Tumbleströmung kurz gehalten wird. Erfindungsgemäß entspricht der Abstand zwischen der Klappe der Schalteinheit im geöffneten Zustand und dem Einlassventil des Brennraumes in etwa dem Maß des Durchmessers eines Einlassventils des Brennraumes.

Zur thermischen Isolation ist bezogen auf den Verlauf des Einlasskanals im Zylinderkopf zwischen dem Gehäuse der Schalteinheit und dem Zylinderkopf in radialer Richtung ein Abstand vorgesehen.
Dieser Spalt verhindert einen direkten Wärmeübergang vom erhitzten Zylinderkopf auf das Gehäuse der Schalteinheit und somit auf die durchströmende Luft.

Das Gehäuse der Schalteinheit ist aus Kunststoff gefertigt. Dies reduziert den Wärmeübertrag gegenüber einem Gehäuse aus anderen Werkstoffen, beispielsweise Metall.

In einer besonders vorteilhaften Ausführung erfolgt die thermische Isolation der Verbrennungsluft vom Zylinderkopf aufgrund der geringeren thermischen Leitfähigkeit des Kunststoffes und der zusätzlichen Luftspaltisolierung.

Die Schaltvorrichtung umfasst zumindest eine Schalteinheit. Je nach Anzahl der Zylinder der Brennkraftmaschine und Anzahl der Einlasskanäle variiert die Anzahl der Schalteinheiten und der darin angeordneten Schaltelemente.

Die Schaltelemente werden gemäß eines vorgegebenen Kennfeldes gesteuert. Je nach Drehzahl bzw. Lastzustand wird abhängig vom Betriebszustand der Brennkraftmaschine ein Wirbel im Einlasskanal erzeugt. Dies erfolgt durch die Anstellung eines Schaltelementes im Einlasskanal, das den Querschnitt verringert und durch eine Kante einen Wirbel in dem Einlasskanal erzeugt, der sich bis in den Brennraum fortsetzt.
Die Schaltelemente schließen in der maximalen Auslenkung beispielsweise bis zu ca. 2/3 des Strömungsquerschnittes des Einlasskanals.

Erfindungsgemäß ist das Schaltelement als Klappe ausgebildet, die vorzugsweise um eine Achse geschwenkt wird. Besonders vorteilhaft ist die Klappe asymmetrisch ausgeführt mit einer Schwenkachse außerhalb des Strömungsquerschnittes des Einlasskanals.

In einer nicht erfindungsgemäßen Ausführung ist das Schaltelement als Drehschieber ausgeführt. Eine Schaltwalze dreht sich um die Längsachse und öffnet bzw. verschließt durch ihre geometrische Gestaltung im Bereich des Einlasskanals diesen teilweise je nach Betriebszustand.

Das zumindest eine Schaltelement kann über einen pneumatischen, hydraulischen oder elektrischen Antrieb betätigt werden.

Ein Antrieb kann alle Schaltelemente einer Schaltvorrichtung betätigen. Alternativ können einzelne Schaltelemente oder Gruppen von Schaltelementen mit jeweils einem Antrieb ausgestattet sein.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen.

Es zeigen:
- Figur 1: eine Schnittdarstellung einer Schaltvorrichtung, angeordnet in einem Zylinderkopf einer Brennkraftmaschine in einer Ausführung mit einer Schaltklappe;
- Figur 2: eine Schnittdarstellung einer Schaltvorrichtung, angeordnet in einem Zylinderkopf einer Brennkraftmaschine in einer nicht erfindungsgemäßen Ausführung mit einer Schaltwalze;
- Figur 3: eine Ansicht einer im Zylinderkopf angeordneten Schaltvorrichtung,
- Figur 4: eine Schnittdarstellung einer Schaltvorrichtung gemäß Schnitt A-A aus Fig. 3 mit angestellter Klappe, in einer nicht erfindungsgemäßen Ausführung;
- Figur 5: eine perspektivische Schnittdarstellung der Schaltvorrichtung nach Fig. 4;
- Figur 6: eine Schnittdarstellung einer Schaltvorrichtung gemäß Schnitt A-A aus Fig. 3 mit vollständig geöffnetem Querschnitt, in einer nicht erfindungsgemäßen Ausführung;
- Figur 7: eine perspektivische Schnittdarstellung der Schaltvorrichtung nach Fig. 6;
- Figur 8: eine Ansicht einer alternativen Ausführung einer im Zylinderkopf angeordneten Schaltvorrichtung mit zwei Teilkanälen und angestellter Klappe;
- Figur 9: eine Ansicht der Schaltvorrichtung gemäß Fig. 8 mit vollständig geöffneten Querschnitten.

### Ausführungsform(en) der Erfindung

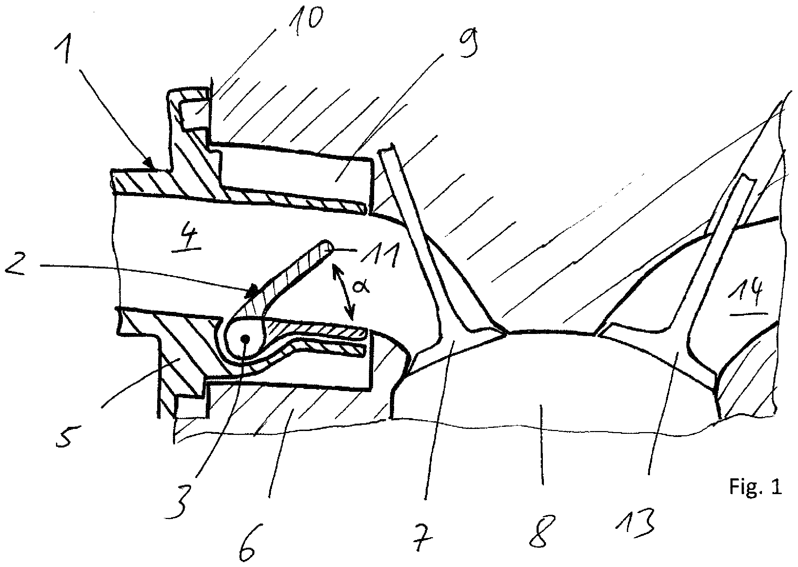

Die Figuren 1, 3, 8 und 9 zeigen Ausführungsformen einer erfindungsgemäßen Schalteinheit. Gleiche Bauteile sind in den einzelnen Figuren mit gleichen Bezugszeichen versehen.

Fig. 1 zeigt eine Schnittdarstellung einer Schalteinheit 1 entlang eines Fluidpfades eines Zylinders einer Brennkraftmaschine mit schwenkbarem Schaltelement 2. Das Schaltelement 2 ist um eine Achse 3 mit dem Winkel α schwenkbar gelagert. Das Schaltelement 2 reduziert den frei zu durchströmenden Querschnitt des Lufteinlasskanals 4, um einen Wirbel im Lufteinlasskanal 4 zu generieren. Das Gehäuse 5 der Schalteinheit 1 ragt in den Zylinderkopf 6 der Brennkraftmaschine, um das Schaltelement 2 möglichst nah am Einlassventil 7 des Brennraumes 8 anordnen zu können. Zwischen der Schalteinheit 1 und dem Zylinderkopf 6 ist ein Luftspalt 9 vorgesehen, um die Schalteinheit und die darin strömende Luft thermisch von der Temperatur des Zylinderkopfes zu entkoppeln.

Ein Dichtelement (nicht dargestellt), angeordnet in einer Dichtnut 10 gegenüber dem Zylinderkopf 6 dichtet den Luftspalt und das Gehäuses 5 der Schalteinheit 1 gegen die Umgebung ab.

Die durch den Lufteinlasskanal 4 am Einlassventil 7 in den Brennraum der Brennkraftmaschine einströmende Luft wird nach der Verbrennung an dem Auslassventil 13 durch den Auslasskanal 14 aus dem Zylinderkopf 6 in Richtung des Abgassystems geleitet.

In Fig. 1 ist das Schaltelement 2 als schwenkbare Klappe 11 ausgeführt. Die Klappe 11 ist derart in das Gehäuse 5 der Schalteinheit 1 aufgenommen, dass bei der vollständigen Öffnung der Klappe der frei durchströmbare Querschnitt des Lufteinlasskanals 4 dem Querschnitt des Lufteinlasskanals 4 vor und hinter der Klappe entspricht und die Klappe den Querschnitt nicht reduziert.

Zur Erzeugung eines Wirbels in der Luftströmung in dem Lufteinlasskanal 4 kann die Klappe um die Achse 3 in die Luftströmung geschwenkt werden und so den Querschnitt stufenlos reduzieren.

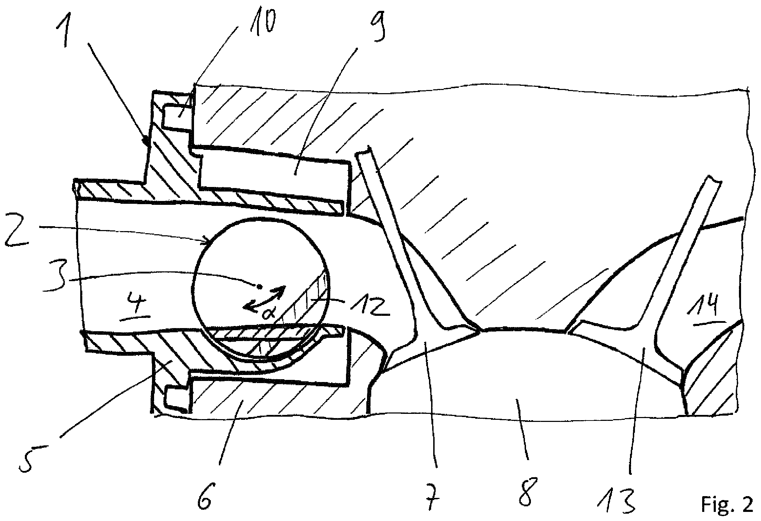

Fig. 2 zeigt eine Schalteinheit 1 wie in Fig. 1 in einer nicht erfindungsgemäßen Ausführung des Schaltelementes 2 als Drehschieber 12.
Der Drehschieber 12 ist ein um die Achse 3 rotierender Körper, der im Bereich des Lufteinlasskanals 4 eine Kontur aufweist, die bei Rotation des Drehschiebers 12 um den Winkel α in die Luftströmung gedreht wird und so den Querschnitt des Lufteinlasskanals 4 im Bereich des Drehschiebers kontinuierlich reduziert und einen Wirbel in der Strömung verursacht.

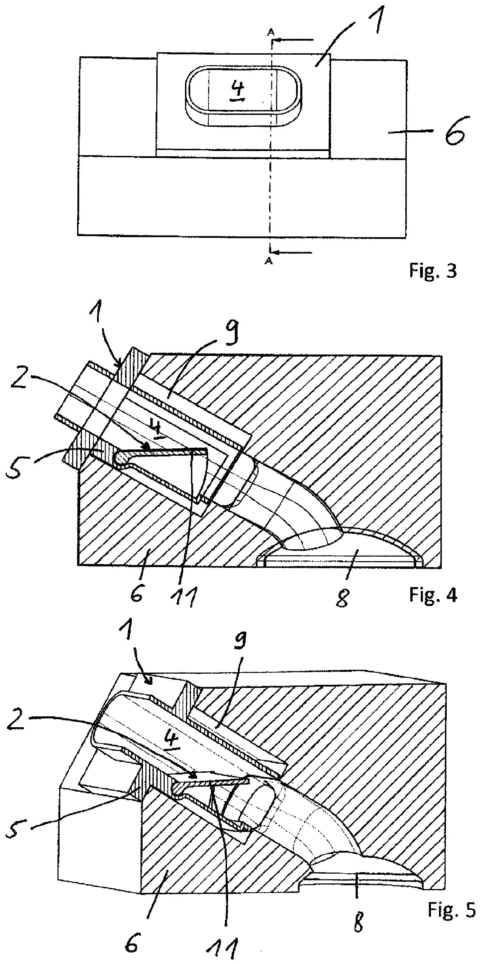

Fig. 3 zeigt eine Ansicht einer Schalteinheit 1 in einem Zylinderkopf 6 in Blickrichtung auf den Lufteinlasskanal 4. Eingezeichnet ist die Schnittlinie A-A, entlang derer die Schnitte der Figuren 4 bis 7 geschnitten sind.

Fig. 4 zeigt einen Schnitt entlang der Schnittlinie A-A aus Fig. 3 durch den Lufteinlasskanal 4 ähnlich Fig. 1 mit dem Schaltelement 2 in Form einer Klappe 11 in ausgeschwenkter Position. Bei geöffnetem Einlassventil (nicht dargestellt in Fig. 4 bis 7) strömt die Luft durch den Einlasskanal an dem durch die aufgestellte Klappe 11 reduzierten Querschnitt vorbei. Dadurch wird ein Wirbel erzeugt, der die Verbrennung im Brennraum 8 verbessert.

Fig. 5 zeigt eine perspektivische Schnittdarstellung der Anordnung nach Fig. 4 mit gleicher Klappenstellung.

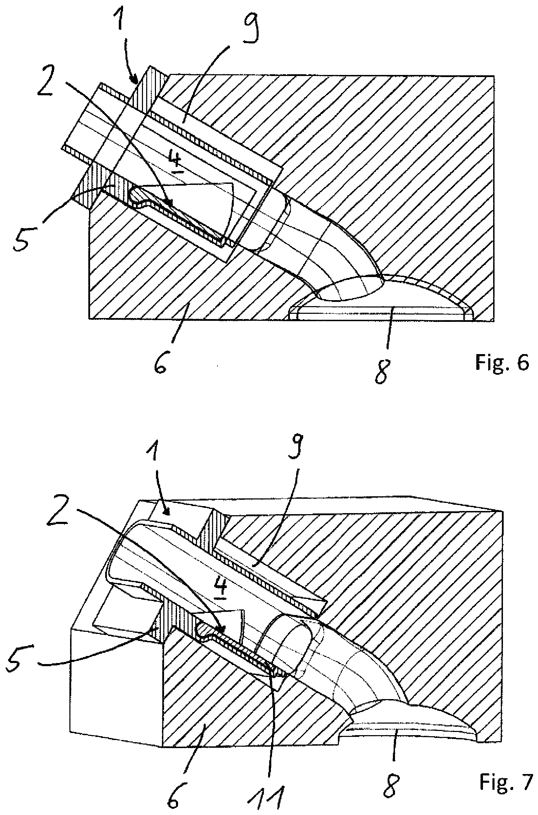

Figuren 6 und 7 zeigen eine gleiche Anordnung der Schalteinheit 1 im Zylinderkopf wie die Figuren 4 und 5, jedoch mit einer vollständig geöffneten Klappe 11. Der Lufteinlasskanal 4 ist im Querschnitt nicht reduziert. Die Luft kann ohne Hindernis in den Brennraum strömen. Es wird kein Wirbel erzeugt, der Druckverlust im Einlasskanal wird durch die vollständig geöffnete Klappe 11 nicht erhöht.

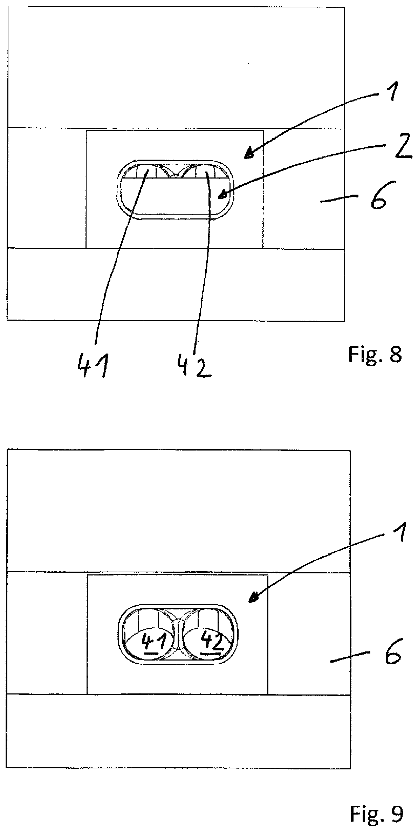

Figuren 8 und 9 zeigen eine Ansicht einer Schalteinheit 1 in einem Zylinderkopf 6 mit einem geteilten Einlasskanal. Der Einlasskanal 4 der vorherigen Darstellungen ist in diesem Ausführungsbeispiel auf zwei Einlasskanäle 41, 42 aufgeteilt. Beide Einlasskanäle 41, 42 sind mit einem Schaltelement 2 teilweise verschließbar, wie in Fig. 8 dargestellt.

Fig. 9 zeigt die gleiche Anordnung wie Fig. 8, jedoch bei vollständiger Öffnung des Schaltelementes 2. Die Luft kann in diesem Betriebszustand ungehindert in den Brennraum strömen.

## Patentansprüche

1. Schaltvorrichtung mit einer Schalteinheit zur Beeinflussung der Luftströmung in wenigstens einem Lufteinlasskanal (4) und einem Zylinderkopf mit Einlassventilen und einem Brennraum einer Brennkraftmaschine, wobei die zumindest eine Schalteinheit (1) zumindest ein Schaltelement (2) zum zumindest teilweisen Schließen und Öffnen des wenigstens einen Einlasskanals (4) aufweist, wobei die Schalteinheit (1) ein Gehäuse (5) aufweist, das in dem Zylinderkopf (6) der Brennkraftmaschine aufgenommen ist und zu dem Zylinderkopf (6) in radialer Richtung einen Abstand (9), insbesondere einen Luftspalt, aufweist, wobei das Gehäuse der Schalteinheit (1) Teil einer Sauganlage ist, wobei es einstückig durch Kanäle der Sauganlage gebildet wird oder mit den Kanälen der Sauganlage unlösbar verbunden ist, wobei durch die Schaltvorrichtung in wenigstens einem Lufteinlasskanal (4) der Brennkraftmaschine in vorgegebenen Betriebszuständen eine Tumbleströmung induzierbar ist, wobei das Gehäuse (5) der Schalteinheit (1) als Kunststoffteil ausgebildet ist, wobei das Schaltelement (2) als Klappe (11) ausgebildet ist, die den Strömungsquerschnitt im Lufteinlasskanal (4) beeinflusst, wobei die Schalteinheit in eine tiefe Aussparung im Zylinderkopf ragt, **dadurch gekennzeichnet, dass die Schalteinheit** bis nahe an die Einlassventile heran ragt, wodurch bei angestellter Klappe ein Tumblewirbel erst kurz vor dem Einlassventil erzeugt wird, wobei der Abstand zwischen der Klappe der Schalteinheit im geöffneten Zustand und dem Einlassventil des Brennraumes in etwa dem Maß des Durchmessers eines Einlassventils des Brennraumes entspricht.

2. Sauganlage für Ansauggas, insbesondere Ansaugluft, einer Brennkraftmaschine, insbesondere eines Kraftfahrzeugs, mit einer Schaltvorrichtung zum Öffnen oder teilweise Schließen eines Lufteinlasskanals (4) nach Anspruch 1.

## Claims

1. Switching device having a switching unit for influencing the air flow in at least one air-intake duct (4) and a cylinder head having intake valves and a combustion chamber of an internal combustion engine, wherein the at least one switching unit (1) features at least one switching element (2) for at least partially closing and opening the at least one inlet duct (4), wherein the switching unit (1) features a housing (5) which is accommodated in the cylinder head (6) of the internal combustion engine and features a spacing (9), in particular an air gap, relative to the cylinder head (6) in the radial direction, wherein the housing of the switching unit (1) is part of a suction system, wherein the housing is formed integrally by ducts of the suction system or is non-detachably connected to the ducts of the suction system, wherein a tumble vortex can be induced in predetermined operating states by the switching device in at least one air-intake duct (4) of the internal combustion engine, wherein the housing (5) of the switching unit (1) is designed as a plastic part, wherein the switching element (2) is designed as a flap (11) which influences the flow cross-section in the air-intake duct (4), wherein the switching unit projects into a deep recess in the cylinder head, **characterized in that** the switching unit projects as close as possible towards the intake valves, so that a tumble vortex is produced only shortly before the intake valve when the flap is engaged, wherein the distance between the flap of the switching unit in the open state and the intake valve of the combustion chamber corresponds approximately to the dimension of the diameter of an intake valve of the combustion chamber.

2. Intake system for intake gas, in particular intake air, of an internal combustion engine, in particular of a motor vehicle, having a switching device for opening or partially closing an air-intake duct (4) according to claim 1.

## Revendications

1. Dispositif de commutation comportant une unité de commutation pour influencer le flux d'air dans au moins un conduit d'admission d'air (4) et une culasse de cylindre avec des soupapes d'admission et une chambre de combustion d'un moteur à combustion interne, l'unité de commutation (1), au moins au nombre d'une, présentant au moins un élément de commutation (2) pour fermer et ouvrir au moins partiellement le conduit d'admission 4), au moin au nombre d'un, l'unité de commutation (1) présentant un boîtier (5) logé dans la culasse de cylindre (6) du moteur à combustion interne et présentant un écartement (9), notamment un entrefer, par rapport à la culasse de cylindre (6) dans la direction radiale, le boîtier de l'unité de commutation (1) faisant partie d'une installation d'aspiration, le boîtier étant formé d'un seul tenant par les conduits de l'installation d'aspiration ou relié de manière indissociable aux conduits de l'installation d'aspiration, un tourbillon pouvant être induit dans des états d'exploitation prédéterminés par le dispositif de commutation dans au moins un conduit d'admission d'air (4) du moteur à combustion interne, le boîtier (5) de l'unité de commutation (1) étant réalisé sous la forme d'une pièce plastique, l'élément de commutation (2) étant réalisé sous la forme d'un clapet (11) qui influence la section transversale d'écoulement dans le conduit d'admission d'air (4), l'unité de commutation faisant saillie dans un évidement profond dans la culasse de cylindre, **caractérisé en ce que** l'unité de commutation fait saillie aussi près que possible des soupapes d'admission, de sorte qu'un tourbillon ne se forme que peu avant la soupape d'admission lorsque le clapet est engagé, la distance entre le clapet de l'unité de commutation à l'état ouvert et la soupape d'admission de la chambre de combustion correspondant approximativement à la dimension du diamètre d'une soupape d'admission de la chambre de combustion.

2. Installation d'aspiration de gaz d'aspiration, en particulier d'air d'aspiration, d'un moteur à combustion interne, notamment d'un véhicule automobile, comportant un dispositif de commutation pour ouvrir ou fermer partiellement un conduit d'admission d'air (4) selon la revendication 1.
